# EUROPEAN PATENT APPLICATION

(11) **EP 1 492 013 A2**
(43) Date of publication of application: **29.12.2004**
(21) Application number: 04100772.5
(22) Date of filing: 26.02.2004
(51) Int. Cl.: G06F 11/34

(54) **Method of monitoring the utilisation of hardware component in computing system**

(30) Priority: 18.06.2003 AU 2003903096 P
(71) Applicant: SAP Aktiengesellschaft, 69190 Walldorf (DE)
(72) Inventor: Beg, Ajmal, Besley North NSW 2207 (AU)

(57) **Abstract**

Monitoring the utilisation of a hardware component in a computing system, with sampling (154) the utilisation of the hardware component at a predefined sampling rate for a predefined sampling period; determining (156) the proportion of the sampled values taken during the sampling period that fall within a predefined range of values; and storing a value representative of the proportion along with time information identifying the time of the sampling period. Storing is carried out if the value representative of the proportion exceeds a predefined threshold.

## Description

### Technical Field

This invention relates to a method of monitoring the utilisation of a hardware component in a computing system.

### Background Art

In a computing system, the utilisation of a piece of hardware is a measure of the working rate or usage of the piece of hardware and is typically expressed as a percentage of the maximum working rate or maximum usage of the piece of hardware. For instance, if a processor is said to be at 60% utilisation, then this means that it is working at 60% of its maximum working rate. At this rate, 40% of the clock cycles of the processor are idle clock cycles and are serving no useful purpose to the operation of the computing system. In other words, the processor could work 40% harder. Similarly, if a computer memory is said to be at 5% utilisation, then 95% of the memory is unused and is available to store additional information.

In a computer system, the utilisation of hardware components such as a processor, a memory, or a communications link may be monitored to provide information about the operation of the computer system. This information is useful to administrators and users of computer systems. Utilisation information may be used to determine whether there is a bottleneck in the computing system that is due to a piece of hardware. If this is identified, then action can be taken to alleviate the bottleneck to improve overall operation of the system. Other reasons for obtaining utilisation information include

a) To determine whether the existing computing system can cope with forecast increased load. b) Load balancing in a networked computing system to efficiently use existing hardware. c) Planning of hardware upgrades.

In a computing system, an operating system loaded on the computing system typically provides functions that allow the utilisation of various hardware components to be determined.

### Disclosure of Invention"

### Technical problem

Utilisation information for a piece of hardware may be collected by regularly sampling and storing a value for the utilisation of that piece of hardware. For instance, the level of utilisation may be sampled every 6 seconds. However, this method quickly gives rise to a large amount of stored data. It can be seen that, for one piece of hardware, 600 samples are taken and stored every hour. Over the period of one year this amounts to over 5 million sampled values. This method is not particularly suitable for monitoring lots of components simultaneously, or for use over an extended period of time because the amounts of stored data become excessively large.

One approach to reduce the amount of utilisation information stored is to calculate an average of the samples taken over a given period of time, such as one hour, and store only the average value. However, this method has a major drawback. In the case of monitoring a processor, if over a given hour 50% of the samples taken have a value of 100% and the remaining samples have a value of 30% then the average sampled value for that hour will be 65%. Thus, it would not be apparent to a person analysing the average sample data that the processor was operating at 100% capacity for half of the hour and was likely to have been holding up users or causing overall delay in a larger computing system. In a busy business environment performance degradation for 30 minutes in one hour can have a serious impact on the business and so this approach clearly does not provide a satisfactory solution.

### Technical solution

The problems are solved by method, system and program according to the independent claims. Advantageous implementations are subject of the dependent claims.

In a first aspect the present invention provides a method of monitoring the utilisation of a hardware component in a computing system, the method comprising the steps of: sampling the utilisation of the hardware component at a predefined sampling rate for a predefined sampling period; determining the proportion of the sampled values taken during the sampling period that fall within a predefined range of values; and storing a value representative of the proportion along with time information identifying the time of the sampling period.

By this method, a reduced data set is prepared from the sampled data without introducing the same inaccuracies as occurred in previous averaging techniques. This is done by determining the proportion of samples falling in a predefined range of interest. An analysis of the stored data informs of the proportion of samples that fell within the range of interest and the time that this happened. This stored data more accurately reflects actual utilisation of the component, thus allowing informed planning decisions to be made in connection with the computer system.

The step of storing may only be carried out if the value representative of the proportion exceeds a predefined threshold. The threshold is set at a level that is significant to the monitoring being carried out. An event that does not meet the threshold is not considered significant and so the data is not stored. This further reduces the amount of data that is stored.

The stored information may be deleted after a predefined length of time has elapsed. The predefined length of time defines for how long the stored data is retained. This assists with managing the amount of utilisation data stored. Data which is not needed in the long term can be promptly deleted. Conversely, long term data may be retained for long periods and then is deleted automatically.

The sampling may be scheduled to occur between a start time and an end time.

The method may be repeated for subsequent sampling periods. This allows a computer system to be monitored to observe how performance varies over time.

In a second aspect the present invention provides a system for monitoring the utilisation of a hardware component in a computing system, the system comprising: sampling means for sampling the utilisation of the hardware component at a predefined sampling rate for a predefined sampling period; determination means for determining the proportion of the sampled values taken during the sampling period that fall within a predefined range of values; and storage means for storing a value representative of the proportion along with time information identifying the time of the sampling period.

The system may further comprise defining means to allow any one of the sampling rate, the sampling period or the range of values to be defined by a user.

The system may further comprise scheduling means to schedule the sampling to occur between a start time and an end time.

The system may further comprise deletion means for deleting the stored information after a predefined length of time has elapsed.

In a third aspect the present invention provides a computer program arranged to instruct a computing system to operate in accordance with a method according to the first aspect of the invention.

In a fourth aspect the present invention provides a computer readable medium carrying a computer program according to the third aspect of the present invention.

### Brief Description of Drawings

An embodiment of the present invention will now be described, by way of example only, with reference to the accompanying drawings, in which:

FIG. 1 is a schematic view of an exemplary computer system which may be monitored by a method or system according to an embodiment of the present invention;

FIG. 2 is a user interface used in a system and method according to an embodiment of the invention;

FIG. 3 is a logic flow diagram illustrating the steps of a method according to an embodiment of the invention; and

FIGS. 4-7 are tables with values and results for case studies 1-4.

### Best Mode for Carrying Out the Invention

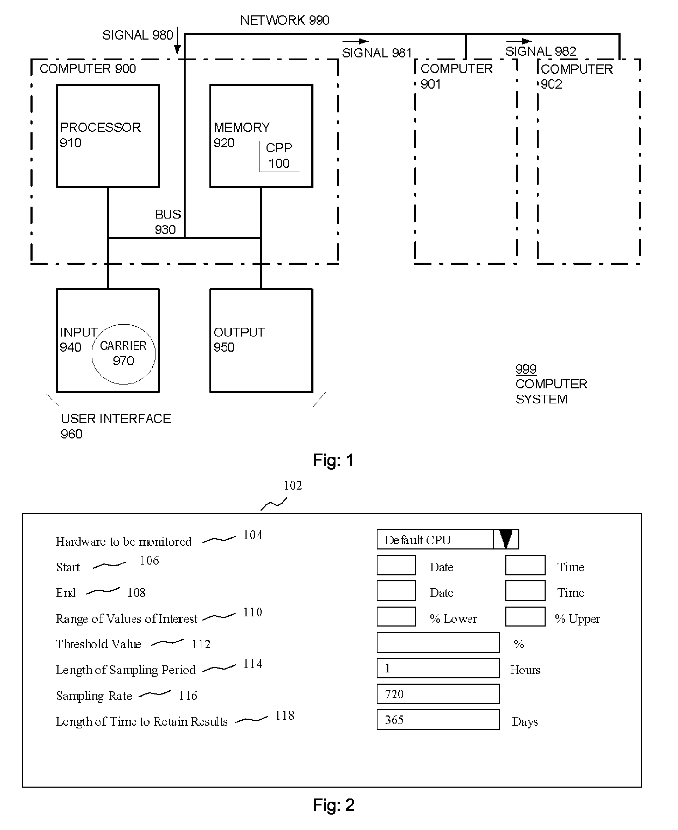

In order to describe operation of an embodiment of the invention it is convenient to refer to the exemplary computing system which may be monitored by the embodiment of the present invention. The system is illustrated in Figure 1 and comprises - among other components - computer 900 and computer program product 100. Details for the exemplary system are given at the end of the specification.

Turning to the preferred embodiment of the invention, and referring to Figure 2, CPP 100 prompts a user who wishes to monitor a hardware component within computer system 999 to define certain parameters for the monitoring job that they plan to carry out. The user defines the necessary values by entering values at graphical user interface 102 using an input device such as a keyboard. Alternatively, the user could define values by responding to screen prompts or by using a settings file that was created at an earlier time.

CPP 100 requires the following parameters to be defined:

(a) The particular hardware component 104 that the user wishes to monitor

(b) A start time 106 and an end time 108 for the monitoring job

(c) The length of the sampling period

(d) A range of values of interest 110 to the user

(e) A threshold value 112 of the proportion of sample values falling within the range that must be met before data is saved

(f) Length of sampling period 114

(g) The sampling rate 116

(h) The length of that any saved data must be retained 118

Any of these values may initially be set to a default value which can be adjusted by the user. For instance, the default value for the choice of particular processor is the CPU of the computing device currently being used by the user. The default value for the sampling period is one hour and the default sampling rate is 720 samples per hour. The values defined by the user are then stored in memory 920.

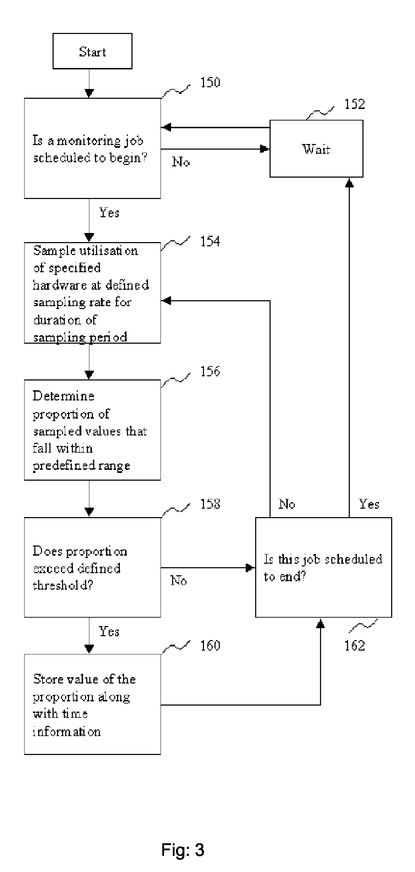

Referring to Figure 3, CPP 100 determines whether a monitoring job is scheduled to begin at step 150. If no job is scheduled CPP100 waits at step 152. When a job is scheduled to begin, at step 154 CPP 100 samples the utilisation of the specified piece of hardware at the defined sampling rate for the defined sampling period according to the values defined for the particular monitoring job. The samples taken are temporarily held in memory 920. At the end of the sampling period, CPP 100 determines what proportion of the sampled values have fallen within the defined range of values of interest to the user at step 156.

At step 158 CPP 100 determines whether the proportion falling within the range exceeds the threshold level defined by the user. If it does then CPP 100 stores the value of the proportion along with the time of day and the date on which the sampling took place at step 160. If the threshold is not exceeded then the value of the proportion is not stored.

CPP 100 determines whether the job should continue at step 162 for subsequent sampling periods according to the start and end times defined by the user.

CPP 100 includes a deletion means in the form of a software routine. CPP operates to run the deletion software routine at regular intervals to delete saved data that is no longer needed according to the length of time to retain the stored data defined by the user for various monitoring operations. For example, it may operate to delete data every Friday morning at 02:00, being a time of probable low utilisation of computer system 999.

Operation of the above described embodiment is illustrated with reference to the following four case studies:

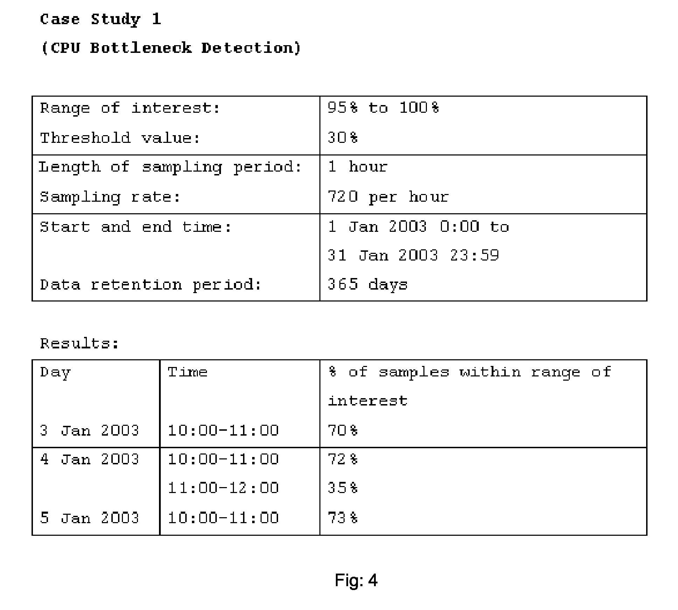

Case Study 1 (CPU Bottleneck Detection) The user is interested in detecting CPU bottlenecks over a year to know whether new hardware should be bought or load balancing should be carried out. The table in FIG. 4 lists values that are defined by the user and list results.

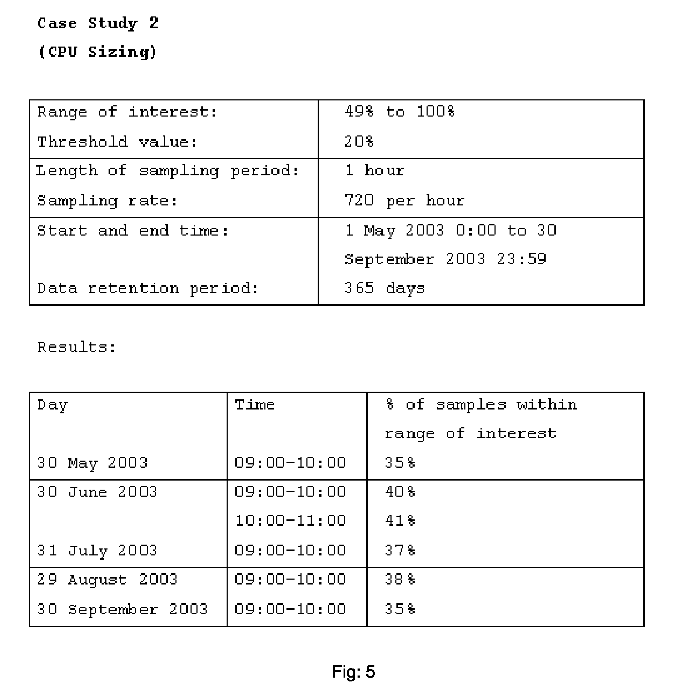

Case Study 2 (CPU Sizing) A user is planning to integrate 3 smaller companies and expects to double the number of users in the system after a year. The user wishes to know whether his current CPU capacity is enough to handle additional workload and if it is not sufficient how much more CPU power is needed. The required capacity is therefore double of the currently required capacity. The user defines the values (FIG. 5) to determine during which hours there will not be sufficient CPU power with double the current number of users.

The stored results data shows that during end of month processing users are expected to face hardware bottleneck related performance degradation. The company can distribute the end of month jobs to multiple days to avoid performance degradation.

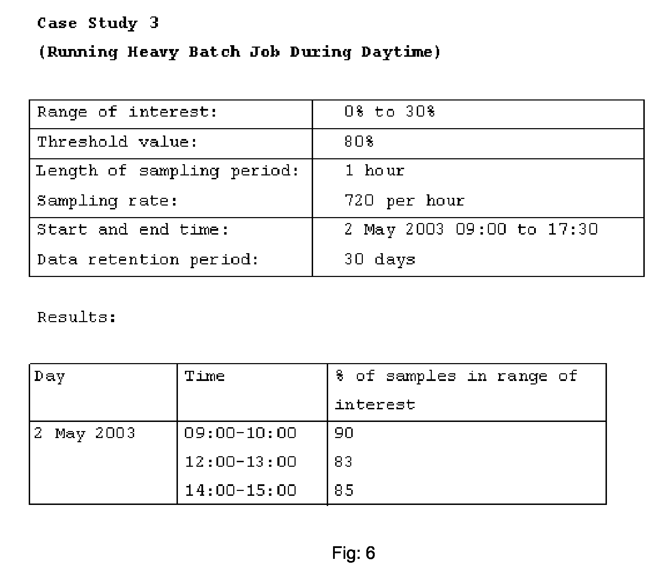

Case Study 3 (Running Heavy Batch Job During Daytime) A user will not be able to finish background batch jobs during night time due to some exceptional circumstances. He wants to run one of the heavy batch jobs during daytime. By referring to previous performance measurements, he knows that when this job is run without any online user activity the CPU utilisation is about 60% for 80% of the samples taken. This job needs to be finished within one hour. The user defines the values (FIG. 6) to find a time when the CPU utilisation with daytime online users only is below 30% for more than 80% of the samples taken.

The results reveal that the computer system has capacity to run the heavy batch job during daytime between the hours shown in the above table.

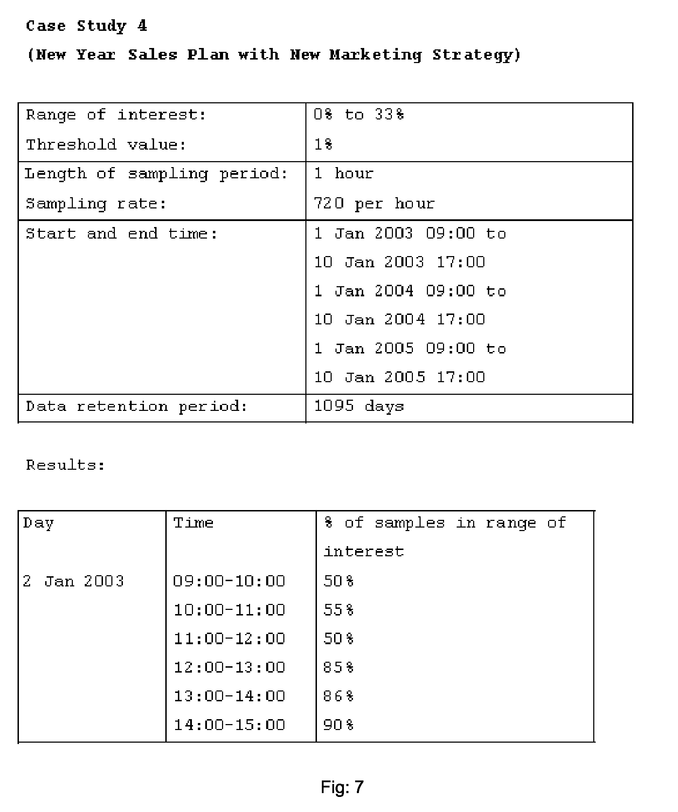

Case Study 4 (New Year Sales Plan with New Marketing Strategy) The user's company has developed a new marketing strategy and it is expected that the level of sales around the New Year period will triple each year for the next three years. The user defines the values (FIG. 7) to determine whether his current CPUs are powerful enough to handle predicted future load around the New Year period.

The results data shows that the system will not be able to handle triple the current workload during the first hours of an annual clearance sale that begins on 2 January.

Whilst the above described case studies involved the monitoring of a processor, other hardware components such as memory (including hard drives) and communications links (including network connections) may similarly be monitored using systems or methods embodying the invention.

It can be seen that the above method and system provide an improved way of monitoring the operation of a hardware component in a computing system. Minimal storage space is needed to carry out the method and subsequent analysis of the stored information provides useful information to enable planning decisions to be made.

The description now turns back to FIG. 1 that illustrates a simplified block diagram of computer system 999 having a plurality of computers 900, 901, 902 (or even more).

Computer 900 can communicate with computers 901 and 902 over network 990. Computer 900 has processor 910, memory 920, bus 930, and, optionally, input device 940 and output device 950 (I/O devices, user interface 960). As illustrated, the invention is implemented by computer program product 100 (CPP, or "computer program"), carrier 970 or signal 980.

In respect to computer 900, computer 901/902 is sometimes referred to as "remote computer", computer 901/902 is, for example, a server, a peer device or other common network node, and typically has many or all of the elements described relative to computer 900.

Computer 900 is, for example, a conventional personal computer (PC), a desktop device or a hand-held device, a multiprocessor computer, a pen computer, a microprocessor-based or programmable consumer electronics device, a minicomputer, a mainframe computer, a personal mobile computing device, a mobile phone, a portable or stationary personal computer, a palmtop computer or the like.

Processor 910 is a central processing unit (CPU). Other computing devices may include other types of processors in the form of a micro-controller unit (MCU), digital signal processor (DSP), or the like.

Memory 920 has elements that temporarily or permanently store data and instructions. Although memory 920 is illustrated as part of computer 900, memory can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick.

Optionally, memory 920 is distributed. Portions of memory 920 can be removable or non-removable. For reading from media and for writing in media, computer 900 uses well-known devices, for example, disk drives, or tape drives.

Memory 920 stores modules such as, for example, a basic input output system (BIOS), an operating system (OS), a program library, a compiler, an interpreter, and a text- processing tool. Modules are commercially available and can be installed on computer 900. For simplicity, these modules are not illustrated.

CPP 100 has program instructions and - optionally - data that cause processor 910 to execute method steps of the present invention. In other words, CPP 100 can control the operation of computer 900 and its interaction in network system 999 so that is operates to perform in accordance with the invention. For example and without the intention to be limiting, CPP 100 can be available as source code in any programming language, and as object code ("binary code") in a compiled form.

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture having a computer readable medium with computer readable program code to cause the computer to perform methods of the present invention. Further, signal 980 can also embody computer program product 100. Optionally, further carriers and further signals embody computer program products (CPP) to be executed by further processors in computers 901 and 902.

Input device 940 provides data and instructions for processing by computer 900. Device 940 can be a keyboard, a pointing device (e.g., mouse, trackball, cursor direction keys), microphone, joystick, game pad, scanner, or disc drive. Although the examples are devices with human interaction, device 940 can also be a device without human interaction, for example, a wireless receiver (e.g., with satellite dish or terrestrial antenna), a sensor (e.g., a thermometer), a counter (e.g., a goods counter in a factory). Input device 940 can serve to read carrier 970.

Output device 950 presents instructions and data that have been processed. For example, this can be a monitor or a display, (cathode ray tube (CRT), flat panel display, liquid crystal display (LCD), speaker, printer, plotter, vibration alert device. Output device 950 can communicate with the user, but it can also communicate with further computers.

Input device 940 and output device 950 can be combined to a single device.

Bus 930 and network 990 provide logical and physical connections by conveying instruction and data signals. While connections inside computer 900 are conveniently referred to as "bus 930", connections between computers 900-902 are referred to as "network 990". Optionally, network 990 includes gateways which are computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, electromagnetic, optical or wireless (radio) signals.

Networks are commonplace in offices, enterprise-wide computer networks, intranets and the Internet (e.g., world wide web). Network 990 can be a wired or a wireless network. To name a few network implementations, network 990 can be, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

A variety of transmission protocols, data formats and conventions is known, for example, as transmission control protocol/internet protocol (TCP/IP), hypertext transfer protocol (HTTP), secure HTTP, wireless application protocol (WAP), unique resource locator (URL), a unique resource identifier (URI), hypertext markup language (HTML), extensible markup language (XML), extensible hypertext markup language (XHTML), wireless markup language (WML), Standard Generalized Markup Language (SGML).

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used herein, phrases, such as "the computer provides" and "the program provides", are convenient abbreviation to express actions by a computer that is controlled by a program.

List of reference numbers used:

999 computer network system

900 computer

910 processor

920 memory

930 bus

940 input device

950 output device

960 user interface

970 program carrier

980 program signal

100 Computer Program Product (CPP)

102 user interface

104 hardware to be monitored

106 start time

108 end time

110 range of values of interest

112 threshold value

114 Length of sampling period

116 sampling rate

118 length of time to retain results

150 method step - Is job scheduled to begin?

152 method step - wait

154 method step - Sample utilisation of hardware for sampling period

156 method step - Determine proportion of values falling in range of interest

158 method step - does proportion exceed threshold

160 method step - Store value along with time information

162 method step - Is job scheduled to end?

## Claims

1. Method of monitoring the utilisation of a hardware component in a computing system, the method comprising the steps of: sampling (154) the utilisation of the hardware component at a predefined sampling rate (116) for a predefined sampling period (114); determining (156) the proportion of the sampled values taken during the sampling period that fall within a predefined range of values (110); and storing (160) a value representative of the proportion along with time information identifying the time of the sampling period.

2. Method according to claim 1 wherein the step of storing is only carried out if the value representative of the proportion exceeds a predefined threshold (112).

3. Method according to claim 2 wherein the predefined threshold is defined by a user.

4. Method according to either claim 1 or claim 2 further comprising the step of deleting the stored information after a predefined length of time (118) has elapsed.

5. Method according to claim 4 wherein the predefined length of time is defined by a user.

6. Method according to any preceding claim wherein the sampling rate is defined by a user.

7. Method according to any preceding claim wherein the sampling period is defined by a user.

8. Method according to any preceding claim wherein the predefined range of values is defined by a user.

9. Method according to any preceding claim wherein the sampling is scheduled to occur between a start time (106) and an end time (108).

10. Method according to any preceding claim further comprising the step of repeating the method for subsequent sampling periods.

11. System for monitoring the utilisation of a hardware component in a computing system, the system comprising: sampling means for sampling the utilisation of the hardware component at a predefined sampling rate for a predefined sampling period; determination means for determining the proportion of the sampled values taken during the sampling period that fall within a predefined range of values; and storage means for storing a value representative of the proportion along with time information identifying the time of the sampling period.

12. System according to claim 11 further comprising defining means to allow any one of the sampling rate, the sampling period or the range of values to be defined by a user.

13. System according to either claim 11 or claim 12 further comprising scheduling means to schedule the sampling to occur between a start time and an end time.

14. System according to any one of claims 11 to 13 further comprising deletion means for deleting the stored information after a predefined length of time has elapsed.

15. Computer program (100) arranged to instruct a computing system to operate in accordance with a method according to any one of claims 1 to 10.

16. Computer readable medium (970) carrying a computer program (100) according to claim 14.
